Europäisches Patentamt

**European Patent Office**

**Office européen des brevets**

(11) Numéro de publication: **0 216 653**
**B1**

(12) **FASCICULE DE BREVET EUROPÉEN**

(45) Date de publication du fascicule du brevet:
04.10.89

(51) Int. Cl.⁴: **B 01 J 2/16,** B 01 J 2/12

(21) Numéro de dépôt: 86401721.5

(22) Date de dépôt: 31.07.86

(54) **Dispositif de granulation.**

(30) Priorité: 07.08.85 FR 8512082
18.04.86 FR 8605615

(43) Date de publication de la demande:
01.04.87 Bulletin 87/14

(45) Mention de la délivrance du brevet:
04.10.89 Bulletin 89/40

(84) Etats contractants désignés:
AT BE CH DE FR GB IT LI LU NL SE

(56) Documents cité:
EP-A-0 075 183
CH-A-477 907
GB-A-794 030
GB-A-1 175 384

(73) Titulaire: **KALTENBACH - THURING S.A., 39, rue
d'Amiens, F-60000 Beauvais (FR)**

(72) Inventeur: **Thuring, Paul, 41, rue d'Amiens, F-60000
Beauvais (FR)**
Inventeur: **Sombret, Jean, 20, rue de la Tapisserie,
F-60000 Beauvais (FR)**
Inventeur: **Vogel, Edmond, 9, rue de la Feuillaume,
F-84240 Vaucresson (FR)**

(74) Mandataire: **Moncheny, Michel, c/o Cabinet
Lavoix 2 Place d'Estienne d'Orves, F-75441 Paris
Cedex 09 (FR)**

**Description**

La présente invention est relative aux dispositifs de granulation pour la production de granulés notamment à partir d'un produit pulvérisable à base d'une substance, par exemple cristallisable, soluble ou insoluble en milieu aqueux, cette substance étant fondue, en mélange ou en solution.

Dans la technique connue, il existe actuellement deux procédés de base totalement différents pour la fabrication de granulés à partir d'une substance fondue, ces procédés étant mis en oeuvre en particulier dans le domaine des engrais et du soufre.

Dans un premier procédé de granulation dit de prilling, la substance fondue est pulvérisée en haut d'une tour et les gouttelettes sont refroidies au cours de leur chute dans la tour. Ce procédé permet d'obtenir des grains d'excellente qualité mais dont la plage granulométrique est limitée entre 2 et 3 mm. Ces dimensions ne correspondent pas toujours aux exigences actuelles des utilisateurs qui souhaitent disposer de granulés d'une taille plus importante. De plus une tour de prilling constitue un ensemble coûteux et dont l'implantation peut poser des problèmes.

Le deuxième procédé est mis en oeuvre à l'aide d'un tambour rotatif, d'un malaxeur ou d'un plateau dans lequel du sel fondu est pulvérisé sur des granulés de petite taille qui par enrobage et refroidissement fournissent des granulés de taille plus importante. Ces granulés de petite taille sont en fait en partie issus du granulateur lui même après criblage des granulés qu'il produit et le rapport de la quantité de granulés réintroduite dans le tambour sur la quantité de granulés sortante est appelé taux de recyclage, ces quantités étant exprimées en poids.

Dans ce procédé de granulation comme dans tous les autres procédés connus, il est nécessaire de prévoir des moyens de refroidissement afin d'évacuer la chaleur de cristallisation du sel fondu.

Un moyen pour éliminer ces calories et permettre.le refroidissement et donc le durcissement des granulés consiste à augmenter fortement le taux de recyclage afin d'augmenter ainsi la quantité de matière froide introduite dans le tambour. Dans ces conditions, le taux de recyclage peut atteindre des valeurs de 2 à 5 pour 1, ce qui est un inconvénient dans un atelier de production dans la mesure où cela conduit d'une part à surdimensionner de manière importante les installations et, d'autre part, à consommer d'importantes quantités d'énergie pour traiter de la matière qui circule en boucle fermée.

Il s'avère donc nécessaire d'absorber l'excédent de chaleur de granulation par une source froide extérieure au dispositif de granulation.

C'est ainsi que le brevet US-A-4 213 924 décrit un dispositif de granulation à tambour rotatif dans lequel un sel fondu est pulvérisé sur un rideau de granulés tombant à l'intérieur du tambour et dans lequel le refroidissement des granulés est effectué par injection d'eau dans le tambour, cette eau s'évaporant en captant les calories à éliminer.

Ce procédé est toutefois d'une mise en oeuvre délicate dans la mesure où le refroidissement par vaporisation d'eau nécessite un contrôle sévère et continu des conditions dans lesquelles on opère. Ces conditions qui sont essentiellement déterminées par la température et l'humidité relative de l'air doivent être telles que le sel fondu ne soit pas susceptible de s'hydrater. De telles conditions d'hydratation sont très variables suivant la nature du sel utilisé de sorte que les conditions de fonctionnement du tambour rotatif sont étroitement dictées par la nature du sel, ce qui n'offre en conséquence aucune souplesse d'utilisation. Il est en outre nécesaire de chasser l'eau introduite dans le tambour, au moyen d'un courant d'air, ce qui pose des problèmes au moment du dépoussiérage de cet air humide. Ce dispositif de granulation nécessite de plus une pulvérisation en très fines gouttelettes et donc l'emploi de buses à orifice très fin avec une pression de pulvérisation particulièrement élevée, de l'ordre de 50 bars pour obtenir des brouillards très fins. Une pression aussi élevée s'applique très difficilement à des nitrates fondus qui seraient dans ces conditions, susceptibles de détonner.

Afin de remédier à ces inconvénients, l'invention a pour but de fournir un dispositif de granulation du type à tambour rotatif, qui permette un refroidissement efficace des granulés, sans introduction d'eau et avec un taux de recyclage aussi bas que possible tout en fournissant des granulés de bonne qualité.

A cet effet, l'invention a pour objet un dispositif de granulation comportant un étage de granulation qui comprend au moins une partie de la longueur d'un tambour monté mobile à rotation autour d'un axe à peu près horizontal, des moyens d'admission d'un substrat particulaire destiné à produire des granulés, débouchant à l'intérieur du tambour et au voisinage d'une extrémité de ce dernier, des moyens pour entraîner le substrat particulaire et les granulés sur une partie de la course du tambour, et des moyens d'extraction des granulés à l'extérieur du tambour, débouchant au voisinage de l'extrémité opposée à celle où débouchent lesdits moyens d'admission, caractérisé en ce qu'il est prévu au moins un dispositif à lit fluidisé disposé à l'intérieur du tambour, de telle façon qu'au moins une partie de substrat et des granulés entraînés par le tambour chute sur le ou chaque dispositif à lit fluidisé et retombe ensuite dans le tambour, des moyens étant prévus pour évacuer à l'extérieur du tambour le fluide issu du ou de chaque dispositif à lit fluidisé.

Suivant d'autres caractéristiques:

- Il est prévu à l'intérieur du tambour, des moyens de pulvérisation pour pulvériser un produit destiné à enrober les particules de substrat et les granulés en cours de formation.
- Le ou chaque dispositif à lit fluidisé est fixe.
- Le ou chaque dispositif à lit fluidisé est orientable autour d'un axe à peu près parallèle à l'axe longitudinal

# EP 0 216 653 B1

du tambour.

- Le dispositif de granulation comprend un dispositif à lit fluidisé incliné vers le haut dans la direction du sens de rotation du tambour.

- Le dispositif à lit fluidisé est disposé de telle façon que les granulés chutent au voisinage de l'extrémité haute de ce dispositif à lit fluidisé.

- Une partie de la périphérie intérieure du tambour, voisine de l'extrémité de ce dernier où débouchent les moyens d'extraction des granulés, est à peu près lisse pour constituer un étage de mise en forme et de lissage des granulés.

L'invention sera mieux comprise à la lecture de la description qui va suivre de différents modes de réalisation donnés uniquement à titre d'exemple, et faite en référence aux dessins annexés, sur lesquels:

- la Fig. 1 est une vue en perspective avec arrachement d'un mode de réalisation du dispositif de granulation de l'invention;
- la Fig. 2 est une vue en coupe, à plus grande échelle, suivant la ligne 2-2 de la Fig. 1;
- la Fig. 3 est une vue analogue à celle de la Fig. 2, illustrant une variante du mode de réalisation du dispositif de la Fig. 1;
- la Fig. 4 est un schéma de principe d'une installation de granulation mettant en oeuvre le dispositif de granulation de l'invention; et
- les Fig. 5 et 6 sont des vues schématiques de deux autres modes de mise en oeuvre de l'invention.

L'installation de granulation illustrée schématiquement sur la Fig. 4 est destinée à produire des granulés à partir de tout produit pulvérisable à base d'une substance cristallisable, telle que par exemple, des nitrates en particulier le nitrate d'ammonium, du soufre, de la potasse, de la soude ou de l'urée ou bien encore les mélanges de telles substances ou autres avec de l'eau, notamment une bouillie aqueuse de phosphate d'ammoniaque ou un mélange obtenu par attaque nitrique de phosphates.

Cette installation comprend un dispositif de granulation 1 du type à tambour rotatif 2 disposé à peu près horizontalement et à l'intérieur duquel s'étend un dispositif à lit fluidisé 3 relié à l'extérieur du tambour à un ventilateur d'air 4, ce dispositif à lit fluidisé étant fixe et n'étant donc pas solidaire en rotation du tambour. Une rampe 5 de pulvérisation à chaud d'un produit à granuler s'étend à l'intérieur du tambour et dans la partie inférieure de ce dernier sous le dispositif à lit fluidisé 3, cette rampe étant reliée à l'extérieur du tambour à un bac homogénéiseur 6 destiné à alimenter cette rampe 5 en produit à pulvériser.

Le dispositif de granulation est en outre relié en amont à une goulotte 7 d'alimentation en granulés de petite taille, par exemple d'un diamètre compris entre 800 micromètres et 3 mm, ces granulés étant destinés à servir de support pour la formation de granulés de plus grosse taille par enrobage avec la substance cristallisable pulvérisée avec le produit. Cette goulotte 7 débouche à l'intérieur du tambour au voisinage d'une première extrémité et, à l'extrémité opposée, des moyens de sortie des granulés sont prévus, ces moyens coopérant avec un transporteur d'évacuation 8 qui achemine les granulés dans la partie aval de l'installation.

Le transporteur 8 est adapté pour décharger les granulés sur un premier dispositif de tamisage 9 qui sépare les granulés de taille marchande, par exemple, de 3 à 5 mm, des autres granulés de taille plus grosse ou plus petite. Les granulés de taille marchande sont acheminés jusqu'à un dispositif à lit fluidisé 10 destiné à achever le refroidissement des granulés avant que ceux-ci soient enrobés d'une couche d'une substance telle que amines, carbonates, talc, etc....., dans un enrobeur 11, cette couche d enrobage étant destinée à éviter l'agglomération des granulés entre eux pendant leur stockage.

Les granulés refusés au niveau du premier dispositif de tamisage 9 en raison de leur taille trop importante, sont broyés (en 12) et:

a) déversés dans le bac homogénéiseur 6 où ils sont mis par fusion sous la forme d'un produit pulvérisable. Ce bac est en outre alimenté en produit frais à pulvériser par une canalisation 12a;

b) recyclés directement au tambour 2 par l'intermédiaire de la goulotte 7.

Les granulés refusés au niveau du premier dispositif de tamisage 9 en raison de leur trop petite taille sont traités au niveau d'un deuxième dispositif de tamisage 13 où les granulés trop petits, par exemple d'une taille inférieure à 800 microns à 1 mm, sont déversés dans le bac homogénéiseur 6 pour y être mis sous la forme d'un produit pulvérisable. Les granulés qui ne traversent pas le deuxième dispositif de tamisage 13, c'est-à-dire ceux d'une taille comprise entre environ 800 micromètres et 3 mm, sont acheminés par l'intermédiaire d'une canalisation 7 jusqu'au tambour 2.

Une trémie 14 est en outre prévue pour introduire des charges dans le bac homogénéiseur 6 par l'intermédiaire d'un transporteur à bande 15 et d'un dispositif de dosage. Ces charges peuvent être destinées par exemple à diminuer le pourcentage d'azote dans les granulés dans le cas où le sel traité est un nitrate.

A l'extrémité du tambour 2, opposée à celle où le dispositif à lit fluidisé 3 est alimenté en air, l'air issu de ce dispositif est évacué jusqu'à une tour de lavage 16 où circule une solution diluée de la substance cristallisable mise en oeuvre dans ce dispositif. Cette solution est ensuite reconcentrée dans un atelier prévu à cet effet avant d'être déversée dans un bac homogénéiseur ou directement recyclée vers ce dernier.

Le dispositif de granulation 1 va être maintenant décrit maintenant plus en détail en se reportant aux Fig. 1 et

3

2. Le tambour 2 disposé à peu près horizontalement comprend sur chacune de ses extrémités un rebord annulaire 17a, 17b, orienté radialement vers l'intérieur pour fermer partiellement chacune de ses faces. Il est supporté à sa périphérie extérieure par des moyens classiques non représentés et entraîné dans le sens de la flèche R, par exemple par une couronne dentée 18 engrènant avec un pignon 19 relié à un moteur non représenté. Le moteur est de préférence associé à un variateur de vitesse permettant de régler la vitesse de rotation du tambour à une valeur optimum qui se situe entre 35 et 45 % environ de la vitesse critique, c'est-à-dire la vitesse à partir de laquelle les granulés sont collés sur la paroi du tambour par la force centrifuge.

Pour entraîner les granulés et les relever sur une partie de la course du tambour 2, ce dernier est muni d'ailettes longitudinales 20 orientées de manière appropriée.

La goulotte 7 d'alimentation en granulés fins débouche à l'intérieur du tambour 2 au voisinage d'une première extrémité de ce dernier en passant à travers l'ouverture ménagée par le rebord annulaire 17a correspondant.

A l'extrémité opposée, une trémie 21 est prévue sous le tambour pour recevoir les granulés qui débordent de ce dernier au-dessus du rebord annulaire 17b correspondant, cette trémie 21 déchargeant ensuite les granulés sur le transporteur 8.

Une conduite 22 d'alimentation en air du dispositif à lit fluidisé 3 reliée au ventilateur 4 et une conduite 23 d'alimentation reliant le bac 6 à la rampe de pulvérisation 5, munie de buses 24 traversent l'ouverture d'extrémité du tambour, voisine de la trémie 21. La canalisation 23 est, de préférence, du type à double enveloppe afin de permettre le maintien à température du produit à l'aide d'une circulation de vapeur d'eau sous pression.

Le dispositif à lit fluidisé 3 s'étend longitudinalement à l'intérieur du tambour et à peu près au centre de dernier de telle façon que sa grille 25 soit orientée vers le haut et de préférence légèrement inclinée dans la direction opposée au sens rotation R du tambour. L'angle d'inclinaison est variable et peut être, par exemple, de l'ordre de 5° par rapport à l'horizontale de sorte que les granulés relevés par les ailettes 20 retombent au voisinage de l'extrémité haute de la grille de fluidisation 25, puis après un court séjour au-dessus de la grille 25, retombent dans le tambour. Pour permettre le réglage de l'inclinaison de ce dispositif à lit fluidisé, ce dernier est avantageusement monté oscillant autour d'un axe à peu près parallèle à l'axe longitudinal du tambour.

Dans le cas du fonctionnement du dispositif décrit ci-dessus avec un sel fondu, notamment un nitrate, les granulés 20 introduits dans le tambour en rotation par l'intermédiaire de la canalisation 7 subissent un certain nombre de cycles d'enrobage et de refroidissement par l'air à une température voisine de la température ambiante, avant de sortir du tambour, ce cycle pouvant se décomposer de la façon suivante.

Les buses 24 enrobent d'une pellicule de sel fondu, les granulés retombant en rideau du dispositif 3. Ces granulés sont ensuite entraînés par les ailettes 20 au-dessus de la grille 25 sur laquelle ils chutent pour être refroidis efficacement en cristallisant la pellicule de sel déposée par pulvérisation avant de retomber au fond du tambour et recommencer un nouveau cycle de croissance du granulé par enrobage/cristallisation. Les granulés se déplacent progressivement dans le tambour en direction de l'extrémité de sortie ou ils débordent par dessus le rebord annulaire 17a et tombent dans la trémie 21.

Grâce à ce dispositif, il est possible de déplacer à volonté la plage granulométrique des granulés obtenus en jouant sur un ou plusieurs des paramètres suivants:

- L'inclinaison de la grille de fluidisation du dispositif à lit fluidisé de manière à faire varier le temps de passage des granulés sur cette grille;
- Le débit d'air de refroidissement à travers la grille à lit fluidisé de manière à contrôler parfaitement la température du lit de granulés;
- Le taux de recyclage et le débit de pulvérisation de la substance cristallisable pour faire varier la quantité disponible de substance par granulé, c'est-à-dire l'épaisseur de chaque couche successive d'enrobage;
- L'inclinaison des ailettes 20 et la vitesse de rotation du tambour pour faire varier les conditions de brassage des granulés et la fréquence à laquelle ils sont enrobés et refroidis.

Dans le cas où l'on met en oeuvre une bouillie, par exemple une bouillie aqueuse de phosphate d'ammoniaque pulvérisée à chaud, le fonctionnement du dispositif de granulation est analogue à celui décrit ci-dessus en dehors du fait que l'air injecté à travers le dispositif à lit fluidisé est préalablement réchauffé à une température telle qu'il sèche les granulés en provoquant la cristallisation du phosphate d'ammoniaque pulvérisé sur ces granulés et qu'il évapore à peu près complètement l'eau contenue dans la bouillie pulvérisée.

On donne ci-après un exemple de conditions opératoires pour le fonctionnement du dispositif de granulation dans la mise en oeuvre de nitrate d'ammonium.

| | |
|---|---|
| - Concentration du produit pulvérisé en substance cristalisable (a) | 97 à 99, 5 % en poids |
| - Température du produit pulvérisé | 170 à 190° C |
| - Taux de recyclage (b) | 0,8:1 à 1:1 |
| - Température du recyclage | 60 à 70° C |
| - Température sortie granulateur | 95 à 105° C |
| - Vitesse rotation du granulateur | 35 à 45 % de Vc* |
| - Débit d'air de refroidissement | 1 à 3 l/kg du produit pulvérisé |

*Vc = vitesse de rotation critique du tambour
(a) = l'impureté étant principalement dans l'eau
(b) = fraction des granulés recyclés par rapport à la fraction produit sortant

Un tel agencement permet d'obtenir des granulés de très bonne qualité grâce au refroidissement homogène et efficace de ceux-ci qui est effectué couche par couche au fur à mesure de leur enrobage par la substance pulvérisée. La quantité de matière à refroidir sur chaque granulé est limitée pour chaque cycle de croissance de ce dernier à une fine pellicule que le flux d'air issu du dispositif à lit fluidisé refroidit très efficacement.

L'utilisation d'un dispositif à lit fluidisé permet en outre de sécher efficacement la substance pulvérisée, rendant ainsi superflue la présence d'un séchoir en aval du dispositif de granulation. Cette propriété intéressante pour un sel fondu qui contient généralement de 1 à 2 % d'eau, s'avère remarquable lors de la mise en oeuvre d'une bouillie dont l'eau est à peu près complètement évaporée par l'air chaud issu du dispositif à lit fluidisé.

L'efficacité de la granulation ne nécessite plus comme dans la technique antérieure, une pulvérisation en très fines gouttelettes et, de ce fait, la pression du produit en amont des buses est de l'ordre de quelques bars. Ceci conduit à une économie du coût de fonctionnement et d'installation.

Encore en raison de l'efficacité des moyens de refroidissement choisis, le débit d'air fourni au dispositif à lit fluidisé est relativement faible, par rapport aux techniques classiques, ce qui permet au dispositif de granulation de présenter un encombrement réduit. L'efficacité du refroidissement permet encore d'utiliser de l'air à température ambiante dans le cas de la mise en oeuvre d'une substance cristallisable fondue. Un tel avantage dispense de conditionner spécialement de l'air pour le refroidir, ce qui rend le procédé plus économique.

La faible valeur du taux de recyclage permet de diminuer le coût de fonctionnement du dispositif de l'invention en minimisant l'énergie utilisée pour traiter de la matière circulant en circuit fermé dans l'installation. Le dispositif de granulation offre par ailleurs, une grande sûreté et une grande souplesse de fonctionnement en n'utilisant ni eau, ni vapeur d'eau et en autorisant le choix des caractéristiques granulométriques en jouant sur un ou plusieurs des paramètres précités.

Les granulés obtenus sont très résistants notamment en raison de leur structure stratifiée et présentent une forme à peu près sphérique et une surface à peu près lisse. Ces granulés peuvent donc être stockés en sacs à des températures de l'ordre de 45 à 50°C sans nécessiter l'addition d'adjuvants durcisseurs ou d'enrobants, ce qui permet d'employer pour leur refroidissement de l'air ambiant même dans les pays chauds.

Suivant encore un autre avantage, les granulés sont très peu poreux et répondent à ce titre, dans les cas des nitrates, aux prescriptions de sécurité.

De nombreuses autres variantes sont bien entendu envisageables sans sortir du cadre de l'invention. C'est ainsi que selon une première variante illustrée sur la Fig. 3, le dispositif de granulation est équipé de deux dispositifs fixes à lit fluidisé 3 disposés l'un au-dessus de l'autre. Le dispositif supérieur 3a est incliné vers le bas dans le sens de rotation R du tambour et le dispositif inférieur 3b est incliné suivant à peu près le même angle dans le sens opposé. De plus, pour s'assurer que les granulés qui chutent sur le dispositif à lit fluidisé supérieur aient un temps de séjour suffisamment long, compte tenu de l'inclinaison de ce dispositif, ce dernier est équipé de préférence d'un déflecteur 26. Ce déflecteur est disposé au-dessus de la grille de fluidisation correspondante et au voisinage de l'extrémité supérieure de celle-ci en s'étendant à peu près parallèlement à l'axe du tambour et en étant légèrement incliné par rapport à la verticale en direction du sens de rotation R de ce tambour de telle façon que les granulés relevés par les ailettes 20, chutent sur ce déflecteur 26 sur lequel ils glissent pour retomber au voisinage de l'extrémité supérieure de la grille du dispositif à lit fluidisé 3a voisin en assurant ainsi un temps de séjour suffisamment long de ces granulés sur le lit fluidisé supérieur. Le dispositif à lit fluidisé inférieur est disposé de telle façon que les granulés tombant du dispositif à lit fluidisé supérieur, chutent au voisinage de son extrémité haute pour assurer ainsi un temps de séjour maximum des granulés sur la grille de fluidisation correspondante avant de retomber en rideau au fond du tambour pour y être enrobés de produit pulvérisé comme cela a été décrit précédemment. Si l'on prévoit d'utiliser plus de deux dispositifs à lit fluidisé, ces derniers seront agencés de telle façon que deux dispositifs à lit fluidisé voisins soient inclinés en direction opposée l'un de l'autre, de sorte que les granulés chutent successivement en cascade sur les différents dispositifs prévus.

Des moyens peuvent être prévus pour empêcher le colmatage du produit sur la paroi interne du tambour.

Le tambour peut aussi comprendre, sur sa périphérie interne au voisinage de son extrémité de sortie, une partie annulaire à peu près lisse destinée à permettre aux granulés de rouler les uns sur les autres et sur cette partie de paroi à peu près lisse afin d'obtenir des granulés de forme à peu près sphérique et régulière.

Plusieurs rampes de pulvérisation peuvent être prévues dans le tambour et les moyens de relevage des granulés dans le tambour peuvent prendre toute forme convenable, autre que des ailettes.

Selon encore une autre variante, le dispositif de granulation de l'invention peut être avantageusement associé à une tour classique de granulation dans laquelle des particules sont formées par pulvérisation d'un sel fondu en haut de la tour et solidification des gouttes tombantes en particules par refroidissement dans un courant d'air ascendant injecté par le bas de la tour.

En effet, dans les tours de granulation, le diamètre moyen des particules obtenues ne dépasse pas 2,5 mm quelle que soit la nature du produit et c'est ainsi qu'en introduisant ces particules issues de la tour dans un

5

tambour de granulation de l'invention, on obtient à la sortie du tambour des granulés d'un diamètre moyen compris entre 3 et 5 mm.

Il convient de remarquer que ce résultat est obtenu sans pour autant augmenter le taux de recyclage habituel de la tour de granulation qui est de l'ordre de 5 à 10 %.

Un tel agencement permet en conséquence d'augmenter la capacité de production à partir des tours de granulation, le tambour de granulation étant disposé entre le bas de telles tours et l'installation de tamisage que l'on prévoit classiquement pour cribler les granulés fraîchement formés afin de renvoyer la fraction refusée vers un dispositif de fusion relié avec les moyens de pulvérisation disposés en haut de la tour.

On se reportera maintenant aux modes de réalisation de l'invention illustrés sur les Fig. 5 et 6.

On sait que les produits particulaires obtenus par compactage présentent l'inconvénient que les particules ainsi obtenues ont sur leur surfaces des arêtes vives et cassantes qui sont génératrices de poussière lors de leur manipulation.

Cet inconvénient concerne également les particules obtenues par compactage de particules plus petites dans la mesure où de telles particules issues de compactage, ont tendance à s'effriter et à produire ainsi de la poussière.

L'invention permet de remédier à ces inconvénients en fournissant un dispositif qui soit susceptible de produire à partir de particules à surface irrégulière et friable, des granulés à surface à peu près lisse et qui ne produiront donc que peu de poussière par frottement lors de leur manipulation.

A cet effet, l'invention présente les caractéristiques complémentaires suivantes:

- le dispositif comporte deux étages A, B et il est prévu des moyens d'introduction des particules dans un premier étage ou étage de lissage des particules, ce premier étage comprenant des moyens d'humidification des particules et des moyens de mise en mouvement relatif de ces particules les unes par rapport aux autres, les moyens d'admission assurant le passage des particules humides du premier étage vers le deuxième étage B, ce deuxième étage étant formé par l'étage de granulation;

- le premier étage comprend au moins une partie de la longueur d'un tambour rotatif, d'axe à peu près horizontal, à l'intérieur et au voisinage d'une extrémité de laquelle, débouchent les moyens d'introduction des particules, les moyens d'admission des particules humides débouchant au voisinage de l'extrémité opposée de cette partie de tambour dont la surface intérieure est à peu près lisse et des moyens d'aspersion d'un fluide sur les particules étant également prévus à l'intérieur de ladite partie de tambour;

- les deux étages du dispositif peuvent être ménagés dans un même tambour ou dans deux tambours distincts.

Dans la définition donnée ci-dessus, et dans la suite de la description, on entend par particules: le substrat brut particulaire issu directement du concassage ou du compactage, et par granulés, les particules obtenues après lissage et séchage de la surface des particules lissées et humides qui pénètrent dans le deuxième étage.

Le dispositif illustré sur la Fig. 5, comporte un tambour 101 d'axe à peu près horizontal et monté à rotation autour de cet axe. Ce tambour comporte à chacune de ses extrémités, une virole 102 annulaire délimitant chacune un rebord orienté radialement vers l'intérieur du tambour autour d'une ouverture centrale correspondante.

Ce tambour 101 est divisé en deux parties suivant sa longueur par une virole annulaire 103 délimitant un rebord annulaire orienté radialement vers l'intérieur et une ouverture centrale.

Une première partie du tambour s'étendant entre une virole 102 d'extrémité et la virole 103 intermédiaire, délimite un premier étage A du dispositif de l'invention. La deuxième partie de ce tambour comprise entre l'autre virole d'extrémité 102 et la virole intermédiaire 103, délimite le deuxième étage B du dispositif.

Une goulotte 104 d'introduction de particules à surface irrégulière, débouche à l'intérieur du tambour au voisinage de son extrémité comprise dans le premier étage et une buse 105 d'aspersion d'un fluide, tel que de l'eau ou une bouillie aqueuse, est prévue à l'intérieur de la première partie du tambour 101. Cette buse 105 est orientée vers le bas pour asperger une masse de particules P présente au fond du tambour et est reliée à des moyens d'alimentation en fluide d'aspersion par une canalisation 106. La paroi cylindrique intérieure de cette première partie du tambour 101 du premier étage A est à peu près lisse de façon à ce que par rotation du tambour, les particules de la masse P soient mises en mouvement relatif les unes par rapport aux autres comme cela va être explicité dans la suite.

La deuxième partie du tambour 101 (étage B) est analogue au tambour de granulation décrit précédemment et comprend sur l'ensemble de sa paroi cylindrique intérieure des ailettes 107 longitudinales, réparties circonférentiellement sur cette paroi cylindrique, ces ailettes faisant saillie radialement vers l'intérieur du tambour.

Le deuxième étage B comprend également un dispositif à lit fluidisé 108 fixe, relié à un ventilateur (non représenté) à l'extérieur du tambour par l'intermédiaire d'une canalisation 109. La grille du dispositif à lit fluidisé 108 s'étend à peu près sur l'ensemble de la longueur du deuxième étage B en étant orientée vers le haut tout en étant également inclinée dans le sens opposé à la rotation du tambour de sorte que les particules humides issus du premier étage A et relevés par les ailettes 107, retombent sur ce dispositif à lit fluidisé 108 où elles sont séchées et/ou refroidies avant de chuter dans le tambour.

De façon facultative, une rampe 110 de pulvérisation d'un fluide contenant une substance susceptible d'enrober les particules, par exemple un sel fondu, une bouillie ou une suspension, peut être prévue, sous le

6

dispositif à lit fluidisé 108 de telle façon que les buses 111 de cette rampe soient orientées dans une direction appropriée pour pulvériser sur le rideau de particules qui chutent à partir du dispositif à lit fluidisé 108. Cette rampe de pulvérisation 110 est reliée à des moyens d'alimentation prévus à l'extérieur du tambour par l'intermédiaire d'une canalisation 112.

Le fonctionnement du dispositif suivant ce premier mode de réalisation est le suivant: des particules à surface irrégulière, issues d'un concassage ou d'un compactage, sont introduites dans le premier étage A du tambour 101 par l'intermédiaire de la goulotte 104; les particules ainsi introduites sont mises en mouvement relatif les unes par rapport aux autres par rotation du tambour 101 et sont aspergées avec un fluide, de préférence de l'eau ou un produit aqueux par l'intermédiaire de la buse 105 afin d'humidier au moins superficiellement ces particules. Au cours de leurs mouvements relatifs, les particules entrent en contact les unes avec les autres de sorte que leurs aspérités préalablement ramollies par humidification, sont réduites, la formation de poussière étant empêchée par l'humidification du milieu.

Par débordement au-dessus du rebord ménagé par la virole 103, les particules humides à surface lissée sont transférées dans le deuxième étage B où elles sont reprises par les ailettes élévatrices 107 qui relèvent ces particules et les laissent tomber sur le dispositif à lit fluidisé 108 où elles sont séchées et/ou refroidies avant de retomber en rideau au fond du tambour en étant, le cas échéant, enrobées au cours de leur chute par la substance pulvérisée par les buses 111. Les particules répètent un certain nombre de fois ce cycle de reprise par les ailettes élévatrices 107, de refroidissement et/ou séchage sur le dispositif à lit fluidisé 108, avant de sortir du tambour 101 sous la forme de granulés à surface régulière par débordement par dessus le rebord ménagé par la virole 102 fixée à l'extrémité de sortie du tambour.

Le fluide pulvérisé par la buse 105 dans le premier étage A peut être simplement de l'eau pour humidifier au moins superficiellement la masse P de particules, ou une bouillie aqueuse dont la phase solide est d'une nature identique ou différente de celle des particules afin de les humidifier au moins superficiellement tout en les enrobant de la phase solide pour contribuer à leur lissage par recouvrement des aspérités résiduelles et comblement des creux entre ces aspérités.

La substance d'enrobage pulvérisée, le cas échéant, par la rampe 110, peut être d'une nature identique ou différente de celle des particules initiales et peut être mise sous la forme d'une bouillie ou d'un sel fondu. Dans le cas où cette substance d'enrobage du deuxième étage B se présente sous la forme d'un sel fondu, l'air diffusé par le dispositif à lit fluidisé 108 a non seulement une fonction de séchage des particules humides issues du premier étage A mais également une fonction de refroidissement du revêtement de sel fondu pulvérisé par les buses 111 de la rampe 110.

Dans le mode de réalisation illustré sur la Fig. 6, le dispositif comprend deux tambours 101a et 101b distincts et munis à chacune de leurs extrémités d'une virole 102 analogue à celle décrite ci-dessus.

Le tambour 101a est compris dans le premier étage A et le tambour 101b est compris dans le deuxième étage B. Le tambour 101b est disposé à un niveau légèrement inférieur au tambour 101a et une goulotte 116 est disposée à la sortie de ce tambour 101a, et débouche à son extrémité inférieure à l'intérieur du tambour 101b au voisinage de l'extrémité d'entrée de celui-ci.

Avec cet agencement, les particules sont introduites dans le premier étage A par l'intermédiaire de la goulotte 104. Les particules humides obtenues à la sortie du premier étage A débordent dans la trémie 116 à partir de laquelle elles sont introduites dans le tambour 101b du deuxième étage B par l'intermédiaire de la goulotte 117.

Dans ce mode de réalisation, l'agitation est effectuée par l'intermédiaire des ailettes élévatrices 107 et le séchage par le dispositif à lit fluidisé 108, ce dernier pouvant bien entendu être remplacé par tout autre moyen de séchage connu.

Les moyens de transfert réalisés ici sous la forme d'une trémie et d'une goulotte, sont indiqués à titre d'exemple dans la mesure où la disposition relative des tambours 101a et 101b peut être différente de celle illustrée sur la Fig. 6 et dans ce cas, ces moyens de transfert peuvent prendre toute forme connue dans la technique, par exemple un transporteur à bande ou à godets.

On peut traiter par ce procédé toute sorte de matériaux appropriés particulaires et en particulier des engrais, c'est-à-dire un matériau à base d'un sel azoté et/ou d'un sel phosphaté et/ou de potasse.

Lorsqu'on pulvérise une bouillie dans le premier étage A, l'intérêt est bien sûr de concentrer au maximum cette bouillie pour avoir le moins d'eau possible à éliminer dans le deuxième étage B.

Pour des particules de scorie potassique c'est-à-dire un mélange de scories issues des aciéries THOMAS et de potasse, comprenant 0 % d'azote, 10 à 14 % de phosphore évalué en $P_2O_5$ et 14 à 15 % de potassium évalué en $K_2O$, la concentration de la bouillie est d'environ 40 à 50 %.

Pour un engrais du type superphosphate (NP), comprenant 14 % d'azote évalué $N_2O$, 36 % de phosphore évalué en $P_2O_5$ et 0 % de potassium, on a atteint une concentration de la bouillie d'environ 65 %.

Le débit massique de la bouillie peut représenter de 10 à 15 % environ de la quantité de particules entrant dans le premier étage.

Sans enrobage par pulvérisation dans le deuxième étage B, l'augmentation en masse des particules entre l'entrée et la sortie du dispositif de l'invention n'est pas négligeable, cette augmentation pouvant être de 5 à 10 % environ de la masse de particules initiale.

Pour illustrer l'effet du procédé de l'invention sur l'évolution en taille des particules et sur la résistance à l'abrasion des granulés obtenus à partir de ces particules, on donne ci-après un exemple de répartition granulométrique et d'indication sur la résistance à l'abrasion de particules à surface irrégulière dites particules entrantes et des granulés obtenus suivant le procédé de l'invention à partir de ces particules entrantes, dits granulés sortants.

Dans cet exemple, les particules sont en scorie potassique à 0 % d'azote, 14 % de phosphore évalué en $P_2O_5$ et 14 % de potassium évalué en $K_2O$, les particules entrantes étant aspergées au niveau du premier étage A avec une bouillie dont la phase solide est de même nature que celle des particules elles mêmes.

Particules entrantes :

granulométrie:

|  |  |  |
|---|---|---|
|  | 29, 3 % > | 4,00 mm |
| 4, 00 mm > | 22, 2 % > | 3, 00 mm |
| 3, 00 mm > | 26, 7 % > | 2, 00 mm |
| 2, 00 mm > | 16, 8 % > | 1, 00 mm |
| 1, 00 mm > | 2, 3 % > | 500 μm |
|  | 2, 7 % < | 500 μm |

- Test d'abrasion:  90, 8 %

Granulés sortants:

granulométrie :

|  |  |  |
|---|---|---|
|  | 45, 5 % > | 4,00 mm |
| 4,00 mm > | 29, 1 % > | 3,00 mm |
| 3, 00 mm > | 24, 9 % > | 2,00 mm |
|  | 0, 5 % > | 1,00 mm |
|  | 0 % < | 1,00 mm |

- Test d'abrasion:  98,1 %

Le test d'abrasion consiste à mesurer la résistance des particules ou des granulés après passage dans un broyeur à boulets à rotation lente. Ce broyeur comportant une jarre de 5 l dans laquelle sont disposées 2 kg de billes en porcelaine dure de 20 mm de diamètre.

On introduit dans la jarre un kilo de particules ou de granulés préalablement tamisés entre 2 et 4 mm. Après 15 mn de rotation à 40 tr/m, les billes sont éliminées et le contenu de la jarre est passé sur un tamis à grosses mailles. Le produit tamisé est retamisé sur un tamis de 2 mm et la fraction refusée par ce tamis est pesée au gramme près.

On exprime le résultat du test d'abrasion en pourcentage de la façon suivante:

Soit P le poids de la fraction refusée au tamis de 2 mm, le pourcentage d'abrasion est alors égal à $\frac{P}{1000} \times 100$

Plus le résultat en pourcentage du test d'abrasion est élevé, plus les granulés ou les particules ont une résistance mécanique importante, c'est-à-dire qu'ils ont une aptitude plus faible à former de la poussière.

On voit donc en se reportant aux valeurs numériques données ci-dessus que les granulés obtenus par le procédé de l'invention à partir de particules à surface irrégulière, ont une aptitude nettement plus faible à former de la poussière que les particules à partir desquelles ces granulés ont été formés.

**Revendications**

1. Dispositif de granulation (1) comportant un étage de granulation (B) qui comprend au moins une partie de la longueur d'un tambour (2; 101) monté mobile à rotation autour d'un axe à peu près horizontal, des moyens d'admission (7; 103, 102) d'un substrat particulaire destiné à produire des granulés, débouchant à l'intérieur du tambour au voisinage d'une première extrémité de ce dernier, des moyens (20; 107) pour entraîner le substrat particulaire et les granulés sur une partie de la course du tambour, et des moyens d'extraction (17b; 102) des granulés à l'extérieur du tambour, débouchant au voisinage de l'extrémité opposée à celle où débouchent lesdits moyens d'admission, caractérisé en ce qu'il est prévu au moins un dispositif à lit fluidisé (3, 3a, 3b; 108) disposé à l'intérieur du tambour de telle façon qu'au moins une partie de substrat et des granulés entraînés par le tambour chute sur ce lit fluidisé puis retombe ensuite dans le tambour, des moyens étant prévus pour extraire du tambour, le fluide issu du ou de chaque dispositif à lit fluidisé.

2. Dispositif suivant la revendication 1, caractérisé en ce qu'il est prévu à l'intérieur du tambour, des moyens de pulvérisation (5, 24, 110) pour pulvériser un produit destiné à enrober les particules de substrat et les granulés en cours de formation.

3. Dispositif suivant la revendication 1 ou 2, caractérisé en ce que le ou chaque dispositif à lit fluidisé est fixe.

4. Dispositif suivant la revendication 1, 2 ou 3, caractérisé en ce que le ou chaque dispositif à lit fluidisé est orientable autour d'un axe à peu près parallèle à l'axe longitudinal du tambour.

5. Dispositif suivant l'une quelconque des revendications précédentes, caractérisé en ce qu'il comprend un dispositif à lit fluidisé dirigé vers le haut et incliné dans la direction opposée à la (R) du tambour.

6. Dispositif suivant la revendication 5, caractérisé en ce que le dispositif à lit fluidisé est incliné de telle façon que les particules de substrat et les granulés chutent au voisinage de son extrémité haute.

7. Dispositif suivant l'une quelconque des revendications 1 à 4, caractérisé en ce qu'il comprend au moins deux dispositifs à lit fluidisé espacés verticalement et décalés latéralement, deux dispositifs voisins étant inclinés dans les sens opposés de sorte que les granulés et les particules de substrat sont amenés à chuter successivement en cascade d'un dispositif à lit fluidisé à l'autre.

8. Dispositif suivant la revendication 7, caractérisé en ce qu'il est prévu un déflecteur (26) disposé au-dessus du dispositif à lit fluidisé supérieur pour amener les granulés et les particules de substrat à chuter au voisinage de l'extrémité supérieure de ce dispositif à lit fluidisé.

9. Dispositif suivant l'une quelconque des revendications précédentes, caractérisé en ce qu'une partie annulaire de la périphérie intérieure du tambour, voisine de l'extrémité de ce dernier où débouchent les moyens de sortie des granulés, est à peu près lisse de telle sorte que les granulés puissent rouler les uns sur les autres et sur la partie de paroi correspondante du tambour pour obtenir des granulés ayant une surface à peu près lisse et une forme à peu près sphérique.

10. Dispositif suivant l'une quelconque des revendications précédentes, caractérisé en ce que les moyens de pulvérisation s'étendent dans la partie inférieure du tambour sous le ou chaque dispositif à lit fluidisé.

11. Dispositif suivant l'une quelconque des revendications précédentes, caractérisé en ce que le ou chaque dispositif à lit fluidisé est alimenté en air chaud.

12. Dispositif suivant l'une quelconque des revendications précédentes, caractérisé en ce qu'il comporte deux étages (A, B) et en ce qu'il est prévu des moyens d'introduction (104) des particules dans un premier étage (A) ou étage de lissage des particules, ce premier étage comprenant des moyens (105, 106) d'humidification des particules et des moyens (101) de mise en mouvement relatif de ces particules les unes par rapport aux autres, les moyens d'admission (103) assurant le passage des particules humides du premier étage vers le deuxième étage (B), ce deuxième étage étant formé par l'étage de granulation.

13. Dispositif suivant la revendication 12, caractérisé en ce que le premier étage (A) comprend au moins une partie de la longueur d'un tambour (102) rotatif, d'axe à peu près horizontal, à l'intérieur et au voisinage d'une extrémité de laquelle, débouchent les moyens (104) d'introduction des particules, les moyens (103) d'admission des particules humides débouchant au voisinage de l'extrémité opposée de cette partie de tambour dont la surface intérieure est à peu près lisse et des moyens (105, 106) d'aspersion d'un fluide sur les particules étant également prévus à l'intérieur de ladite partie de tambour.

14. Dispositif suivant la revendication 13, caractérisé en ce que les parties de longueur de tambour des premier et deuxième étages, sont délimitées par un même tambour (101), les moyens d'admission des particules humides comprenant une virole (103) disposée transversalement à l'intérieur du tambour en un emplacement intermédiaire de la longueur de celui-ci en délimitant ainsi deux parties dans le tambour, associées pour l'une au premier étage (A) et pour l'autre au deuxième étage (B), les granulés passant d'une partie à l'autre par débordement au niveau de l'ouverture centrale de la virole.

15. Dispositif suivant la revendication 13, caractérisé en ce que les premier et deuxième étages comprennent chacun un tambour (101a, 101b) distinct entre lesquels sont disposés les moyens (116, 117) d'admission des granulés.

**Patentansprüche**

1. Granulierungsvorrichtung (1) mit einer Granulierungsstufe (B), die eine Trommel (2; 101) aufweist, von der der Länge nach wenigstens ein Teil beweglich angebracht ist, um sich um eine fast horizontale Achse zu drehen, mit einer Einrichtung (7; 103, 102) zum Befüllen mit einem zur Erzeugung eines Granulats bestimmten Spezialausgangsmaterial, die in der Nähe eines ersten Endes des Trommel in das Innere derselben mündet, mit Einrichtungen (20; 107) zum Mitführen des Spezialausgangsmaterials und des Granulats durch einen Teil des Trommelverlaufes und mit einer Einrichtung (17b; 102) zum Abführen des Granulats in das Äußere der Trommel, wobei sich diese Einrichtung in der Nähe desjenigen Ende öffnet, das dem Ende, in das die Befüllungseinrichtung mündet, gegenüberliegt, dadurch gekennzeichnet, daß wenigstens eine Wirbelbetteinrichtung (3, 3a, 3b; 108), die im Inneren der Trommel derart angeordnet ist, daß wenigstens ein Teil des durch die Trommel mitgeführten Ausgangsmaterials und des Granulats auf das Wirbelbett fällt und anschließend in die Trommel zurückfällt, und eine Einrichtung zum Abführen der in der oder in jeder Wirbelbetteinrichtung entstandenen Flüssigkeit aus der Trommel vorgesehen sind.

2. Vorrichtung gemäß Anspruch 1, dadurch gekennzeichnet, daß im Inneren der Trommel Zerstäubungseinrichtungen (5, 24; 110) vorgesehen sind, mit denen ein zur Umhüllung der Partikel des Ausgangsmaterials und des Granulats während seiner Ausbildung bestimmtes Produkt zerstäubt wird.

3. Vorrichtung gemäß Anspruch 1 oder 2, dadurch gekennzeichnet, daß jede Wirbelbetteinrichtung ortsfest ist.

4. Vorrichtung gemäß Anspruch 1, 2 oder 3, dadurch gekennzeichnet, daß jede Wirbelbetteinrichtung um eine Achse einstellbar ist, die nahezu parallel zur Längsachse der Trommel ist.

5. Vorrichtung gemäß einem der vorangehenden Ansprüche, dadurch gekennzeichnet, daß eine Wirbelbettvorrichtung vorgesehen ist, die nach oben gerichtet und in einer Richtung geneigt ist, die der Drehrichtung (R) der Trommel entgegengesetzt ist.

6. Vorrichtung gemäß Anspruch 5, dadurch gekennzeichnet, daß die Wirbelbetteinrichtung so geneigt ist, daß die Partikel des Ausgangsmaterials und das Granulat in der Nähe ihres oberen Endes herabfallen.

7. Vorrichtung gemäß einem der Ansprüche 1 bis 4,

dadurch gekennzeichnet, daß Wenigstens zwei in einem vertikalen räumlichen Abstand und in seitlicher Verschiebung angeordnete Wirbelbetteinrichtungen vorgesehen sind, wobei zwei benachbarte Einrichtungen in entgegengesetzten Richtungen geneigt sind, so daß das Granulat und die Partikel des Ausgangsmaterials so geführt werden, daß sie nacheinander kaskadenartig von einer Wirbelbetteinrichtung auf die andere fallen.

8. Vorrichtung gemäß Anspruch 7,

dadurch gekennzeichnet, daß ein oberhalb der oberen Wirbelbetteinrichtung angeordneter Abweiser (26) vorgesehen ist, mit dem das Granulat und die Partikel des Ausgangsmaterials so geführt werden, daß sie in der Nähe des höchsten Endes dieser Wirbelbetteinrichtung herabfallen.

9. Vorrichtung gemäß einem der vorangehenden Ansprüche,

dadurch gekennzeichnet, daß ein ringförmiger Bereich des inneren Trommelumfanges, der an dasjenige Trommelende angrenzt, in das die Abführeinrichtung für das Granulat mündet, annähernd glatt ausgebildet ist, so daß die Granulatkörnchen aufeinander und auf dem entsprechenden Seitenwandbereich der Trommel rollen können, damit Granulatkörnchen mit einer annähernd glatten Oberfläche und einer annähernd kugelförmigen Form zu erhalten werden können.

10. Vorrichtung gemäß einem der vorangehenden Ansprüche,

dadurch gekennzeichnet, daß die Zerstäubungseinrichtungen sich im unteren Bereich der Trommel unterhalb der oder jeder Wirbelbettvorrichtung erstrecken.

11. Vorrichtung gemäß einem der vorangehenden Ansprüche,

dadurch gekennzeichnet, daß die oder jede Wirbelbettvorrichtung mit heißer Luft versorgt wird.

12. Vorrichtung gemäß einem der vorangehenden Ansprüche,

dadurch gekennzeichnet, daß zwei Stufen (A, B) und eine Einrichtung (104) zum Einleiten der Partikel in eine erste Stufe (A) oder Partikelglättungsstufe vorgesehen sind und die erste Stufe Einrichtung (105, 106) zum Befeuchten der Partikel, Einrichtungen (101) zum Versetzen der Partikel in eine Relativbewegung zueinander und Einlaßeinrichtungen (103), die den Durchgang der befeuchteten Partikel von der ersten zur als Granulierungsstufe ausgebildeten zweiten Stufe B gewährleisten, aufweist.

13. Vorrichtung gemäß Anspruch 12,

dadurch gekennzeichnet, daß die erste Stufe (A) der Länge nach wenigstens einen Teil der drehbaren Trommel (102) mit nahezu horizontaler Achse umfaßt, wobei in dessen Inneres in der Nähe eines Ende desselben die Einrichtung (104) zum Einleiten der Partikel mündet, die Einrichtungen (103) zum Einlassen der befeuchteten Partikel in der Nähe desjenigen Endes sich öffnen, das dem Trommelbereich, dessen innere Oberfläche nahezu glatt ist, gegenüberliegt, und Einrichtungen (105, 106) zum Sprengen einer Flüssigkeit auf die Partikel ebenfalls im Inneren dieses Bereiches der Trommel vorgesehen sind.

14. Vorrichtung gemäß Anspruch 13,

dadurch gekennzeichnet, daß die Bereiche der ersten und zweiten Stufe der Trommel der Länge nach durch dieselbe Trommel (101) begrenzt werden und die Einrichtungen zum Einlassen der befeuchteten Partikel ein im Trommelinneren an einer Stelle zwischen den Stirnseiten der Trommel transversal angeordnetes Eisenband (103) aufweisen, das auf diese Weise die beiden Bereiche in der Trommel, deren einer zur ersten Stufe (A) und deren anderer zur zweiten Stufe (B) gehört, trennt, wobei das Granulat sich durch Überlaufen auf dem Niveau der mittigen Öffnung des Eisenbandes von einem Bereich zum anderen bewegt.

15. Vorrichtung gemäß Anspruch 13,

dadurch gekennzeichnet, daß die ersten und zweiten Stufen jeweils verschiedene Trommeln (101a, 101b) aufweisen, zwischen denen Einlaßeinrichtungen (116, 117) für das Granulat angeordnet sind.


## Claims

1. Granulation apparatus (1) having a granulation stage (B) comprising at least part of the length of a drum (2, 101) mounted so as to rotate about a roughly horizontal axis, means for admitting (7, 103, 102) a particulate substrate for producing granules issuing into the interior of the drum and in the vicinity of one end thereof, means (20, 107) for entraining the particulate substrate and granules over part of the travel of the drum and means (17b, 102) for extracting granules to the exterior of the drum issuing in the vicinity of the opposite end to that at which said admission means issue, characterized in that there is at least one fluidized bed device (3, 3a, 3b, 108) located within the drum, in such a way that at least part of the substrate and granules entrained by the drum drops onto the or each fluidized bed device and then drops again into the drum, means being provided for discharging to the outside of the drum the fluid issuing from said or each fluidized bed device.

2. Apparatus according to claim 1, characterized in that within the drum are provided atomizing means (5, 24, 110) for atomizing a product for coating the substrate particles and granules during formation.

3. Apparatus according to claims 1 or 2, characterized in that the or each fluidized bed device is fixed.

4. Apparatus according to claims 1, 2 or 3, characterized in that the or each fluidized bed device can be oriented about an axis roughly parallel to the longitudinal axis of the drum.

5. Apparatus according to any one of the preceding claims, characterized in that it comprises a fluidized bed device inclined upwards in the direction opposite to the rotation direction (R) of the drum.

6. Apparatus according to claim 5, characterized in that the fluidized bed device is inclined in such a way that the substrate particles and the granules drop in the vicinity of its upper end.

7. Apparatus according to any one of the claims 1 to 4, characterized in that it comprises at least two vertically spaced and laterally displaced fluidized bed devices, two adjacent devices being inclined in opposite directions, in such a way that the granules and substrate particles are made to successively drop in cascade form from one fluidized bed device to the other.

8. Apparatus according to claim 7, characterized in that there is a deflector (26) above the upper fluidized bed device for making the granules and substrate particles drop in the vicinity of the upper end of said fluidized bed device.

9. Apparatus according to any one of the preceding claims, characterized in that an annular part of the inner periphery of the drum, close to the end of the latter where the granule discharge means issue, is relatively smooth, so that the granules can roll on one another and on the corresponding drum wall part, so as to obtain granules having a relatively smooth surface and a relatively spherical shape.

10. Apparatus according to any one of the preceding claims, characterized in that the atomizing means extend into the lower part of the drum beneath the or each fluidized bed device.

11. Apparatus according to any one of the preceding claims, characterized in that the or each fluidized bed device is supplied with hot air.

12. Apparatus according to any one of the preceding claims, characterized in that it has two stages (A, B) and that means (104) are provided for introducing particles into a first or particle smoothing stage (A), which has means (105, 106) for moistening the particles and means (101) for bringing about a reciprocal relative movement of said particles, the admission means (103) ensuring the passage of the moist particles from the first stage to the second stage (B), the latter being formed by the granulation stage.

13. Apparatus according to claim 12, characterized in that the first stage (A) comprises at least part of the length of a roughly horizontally axed, rotary drum (102) within and the vicinity of one end of which issue the means (104) for introducing the particles, the wet particle admission means (103) issuing in the vicinity of the opposite end of said drum part, whereof the inner surface is relatively smooth and means (105, 106) for sprinkling a fluid onto the particles are also provided within said drum part.

14. Apparatus according to claim 13, characterized in that the drum length parts of the first and second stages are defined by a first drum (101), the moist particle admission means having a ferrule (103) positioned transversely within the drum at an intermediate location of the length thereof, whilst in this way defining two parts within the drum, one being associated with the first stage (A) and the other with the second stage (B), the granules passing from one part to the other by overflowing at the central opening of the ferrule.

15. Apparatus according to claim 13, characterized in that the first and second stages each have a separate drum (101a, 101b) between which are arranged the granule admission means (116, 117).